# EUROPEAN PATENT SPECIFICATION

(11) **EP 4 225 012 B1**
(45) Date of publication and mention of the grant of the patent: **04.12.2024**
(21) Application number: 21801625.1
(22) Date of filing: 07.10.2021
(51) Int. Cl.: A01D 46/26

(54) **APPARATUS FOR SMALL FRUIT HARVESTING**
VORRICHTUNG ZUM ERNTEN VON KLEINEN FRÜCHTEN
APPAREIL POUR LA RECOLTE DE PETITS FRUITS

(30) Priority: 08.10.2020 IT 202000023698
(43) Date of publication of application: 16.08.2023
(73) Proprietor: VIVARELLI, Alice, 40042 Lizzano in Belvedere (BO) (IT)
(72) Inventor: MATTAROZZI, Nicolò, 40038 Vergato (BO) (IT); VIVARELLI, Alice, 40042 Lizzano in Belvedere (BO) (IT)
(74) Representative: De Milato, Francesco
(86) International application number: PCT/IB2021/059196
(87) International publication number: WO 2022/074596

(56) References cited:
- EP-A1- 2 699 075
- EP-A1- 3 430 883
- EP-A2- 2 374 345
- CN-U- 201 509 440

## Description

### Field of the invention

The present invention relates to an apparatus for harvesting small fruits, such as olives, almonds, pistachios and similar fruits.

Furthermore, the invention relates to a method for harvesting the aforementioned small fruits.

### Description of the prior art

As known, several apparatuses exist that are used for shaking the branches of some plants by vibrating and/or rotating the same by rods, or fingers, of which they are provided with. In this way, the aforementioned apparatuses cause the small fruits, in particular olives, but also almonds, pistachios, coffee beans, etc. to fall down from the branches of the plants, in order to be collected.

An example of a similar apparatus is described in WO2007/129207. The apparatus comprises two comb-like members, each of which comprising an elongated base body and a plurality of rods which protrude from the same face. The base bodies are pivotally connected to a support by hinges having the same axis, therefore, the two comb-like members are arranged on parallel planes and face with each other. In particular, in a determined relative position they are superimposed with each other, if viewed from one side. The apparatus is provided with an electric motor which causes the two comb-like members to oscillate by a motion transmission group. More precisely, the motion transmission group is arranged to cause an alternating rotational motion of the two comb-like members in opposite face with each other. The apparatus provides, furthermore, a rod having a first end fixed to the support and a second end having an handle to be grasped by a user. A drawback of the apparatus described above is the small working area that is generated by the movement of the comb-like members with respect to their size.

Another example of an apparatus for harvesting is described in WO2017/002047. In this case, the two comb-like members are positioned side by side in order to have a larger working area with respect to the previous case. Also in this case, the comb-like members are operated to move according to an alternative rotational motion in opposite phase with each other about a respective axis. More in detail, a motion transmission group is provided which transforms the continuous rotational motion provided by a motor at first into a reciprocating translational motion of a shaft and, then, into the alternative rotational motion of the comb-like members by a couple of connecting rods hinged at one side to the end and to the other to respective elongated bases of the comb-like members.

However, this apparatus is structurally complex and too much heavy owing to the kind of transmission that is used.

Still another example of an apparatus for harvesting is described in EP3430883. In this case, analogously to the previous case, the two comb-like members are positioned side by side, but the motion transmission group provides two connecting rods superimposed to each other and hinged, at a first end to the same eccentric pivot, and to a respective elongated base element of one of the two comb-like members, at the other end.

However, the shaking action exerted on the braches by the device described in EP3430883 is not highly effective, unless a motor of high power is used thus having a high energy consumption and an increase of the weight of the apparatus. This is mainly caused by the solution adopted for the transmission group providing two superimposed connecting rods hinged to the same eccentric pivot of the only crank that is present.

Furthermore, the technical solution provided for the transmission group of EP3430883 unavoidably implies a high thickness of the working head of the apparatus. This, during working conditions, blocks the view of the user impeding him to clearly see the area involved in the harvesting action. Therefore, it is possible to carry out the shaking action with the comb-like members in areas with no fruits, or even, on parts of the plant that should not be involved because extremely weak, with the risk to damage the same.

Another example of an apparatus for harvesting olives and small fruits is described in EP2699075. In particular, this document described an apparatus for harvesting olives comprising a support body arranged to be grasped by a user, and one, or more, comb-like members that are moved according to an oscillating motion by a motor group through a motion transmission group. The comb-like member is provided with a support structure that is axially constrained and pivotally to a sleeve hinged to a containment box at a transversal axis for causing a first oscillating motion of the support structure about the transversal axis. The support structure is, furthermore, constrained to the containment box at an axially distal portion with respect to the portion connected to the sleeve by a joint in such a way to produce a second oscillating motion of the support structure about a longitudinal axis.

However, the technical solution described in EP2699075 for the transmission group is structurally complex. Furthermore, the sleeves for engaging the support structure of the comb-like member and the containment box implies a high risk that dirty and dusts produced during the shaking of the branches of the plant can penetrate between the different movable parts, which therefore, not only compromise the effectiveness of the shaking action, but can also cause the apparatus to be obstructed and, therefore, be damaged, thus requiring periodical and frequent maintenance operations for cleaning the apparatus.

### Summary of the invention

It is, therefore, an object of the present invention to provide an apparatus for harvesting small fruits, such as olives, almonds, pistachios and similar fruits, which allows to overcome the aforementioned drawbacks of the solutions adopted in the prior art.

It is, in particular, an object of the present invention to provide a similar apparatus for harvesting small fruits, such as olives, almonds, pistachios and similar fruits, that is able to carry out an effective shaking action of the branches even if a light motor is used and having a moderate maximum power.

It is another object of the present invention to provide a similar apparatus for harvesting small fruits, such as olives, almonds, pistachios and similar fruits, having an extremely reduced thickness without compromising the effectiveness of the shaking action.

These and other objects are achieved by an apparatus, according to the invention, for harvesting small fruits, in particular olives, almonds, pistachios and similar fruits, said apparatus comprising:
- a handle portion at which a user is arranged to grasp a manoeuvring pole of said apparatus;
- a support body;
- a first and a second oscillating comb-like member pivotally connected to said support body at respective fulcrum points, said first and second oscillating comb-like members being positioned side by side and comprising, respectively, a first and a second elongated base portion provided, respectively, with a first and a second plurality of rods;
- a motor group operatively connected to said first and second oscillating comb-like members by a motion transmission group comprising:
   - a first connecting rod member having a first end pivotally connected to an end portion of the first elongated base portion and a second end arranged to connect the first connecting rod member to a crank group operatively connected to the motor group and provided with an eccentric pivot arranged to pivotally engage in an engagement hole provided at the second end of the first connecting rod member;
   - a second connecting rod member having a first end pivotally connected to an end portion of the second elongated base portion and a second end pivotally connected to the first connecting rod member in a point positioned between the first and the second end of the first connecting rod member;
   whose main characteristic is that the motor group comprises a motor shaft on which a pinion is mounted arranged to directly mesh with a toothed wheel of said crank group to transmit the motion to said first oscillating comb-like member by said first connecting rod member, and to said second oscillating comb-like member by said second connecting rod member pivotally connected to said first connecting rod member in that said crank group comprises a first part and a second part fixed at opposite sides to said toothed wheel, said first part being provided with said eccentric pivot in that said first part is connected to said second part of said crank group at respective flange portions and in that at least the first part is configured to form a closed body.

Other features of the invention and the related embodiments are set out in the dependent claims.

In particular, the aforementioned first end of the first and second elongated base portions are arranged to face to each other.

Advantageously, between the eccentric pivot and the engagement hole a bearing is provided.

Advantageously, the first part and the aforementioned second part are associated to respective bearings.

In particular, the aforementioned first and second oscillating comb-like members comprise, respectively, a first and a second directing body. More in particular, the first and second directing body comprises, respectively, a first and a second plurality of tubular bodies operatively connected by a plurality of connection rods, each tubular body being arranged to house and direct a respective rod along a predetermined direction.

Advantageously, the first and second pluralities of tubular bodies are arranged to be engaged, respectively, to the first and second oscillating comb-like members.

In particular, the second connecting rod member can be shaped. More in particular, the second connecting rod member can comprise:
- a first portion provided with the first end pivotally connected to the second elongated base portion;
- a second portion provided with the second end superimposed to said first connecting rod member, said first and second portions being connected by a connection portion configured in such a way that said first and second elongated base portions are substantially coplanar to each other.

### Brief description of the drawings

The invention will now be shown with the following description of its exemplary embodiments, exemplifying but not limitative, with reference to the attached drawings in which:
- Fig. 1 diagrammatically shows a side elevation perspective view of a first embodiment of an apparatus, according to the invention, for harvesting small fruits, in working conditions;

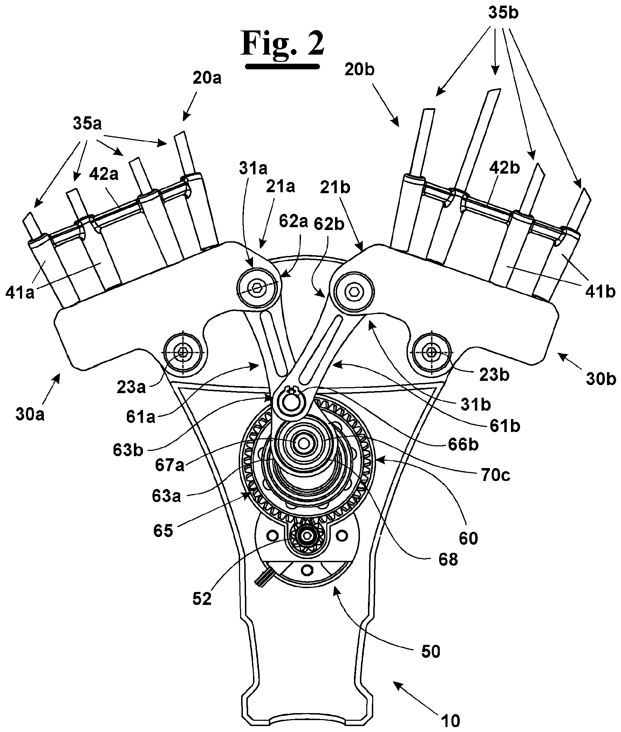

- Fig. 2 diagrammatically shows a plan view the transmission group of which the apparatus for harvesting, according to the invention, is provided, in a first working position;
- Fig. 3 diagrammatically shows a plan view of the transmission group of figure 2 in a second working position;

- Fig. 4 diagrammatically shows a longitudinal section view of the working head of the apparatus of figure 1;
- Fig. 5 diagrammatically shows a plan view with the protection carter that has been removed to show the main components of another embodiment of the apparatus, according to the invention, for harvesting small fruits, in particular olives, almonds, pistachios, etc.;
- Fig. 6 diagrammatically shows a plan view with the protection carter that has been removed to show the main components of another embodiment of the apparatus, according to the invention, for harvesting small fruits, in particular olives, almonds, pistachios, etc.;
- Fig. 7 diagrammatically shows a longitudinal section view of a possible embodiment of a second connecting rod member that can be adopted by the apparatus, according to the invention, for harvesting small fruits;
- Fig. 8 diagrammatically shows a side elevational view of a possible alternative embodiment of the first connecting rod member and of the second connecting rod member that can be used by the apparatus, according to the invention, for harvesting small fruits;
- Figures 9 and 10 diagrammatically show, respectively a plan view and a side elevation perspective view, of a possible alternative embodiment of the first connecting rod member and of the second connecting rod member that can be used by the apparatus, according to the invention, for harvesting small fruits;
- Fig. 11 diagrammatically shows a side elevational view, of a possible embodiment of a transmission group and of a crank group that can be used by the apparatus, according to the invention, for harvesting small fruits;
- Fig. 12 diagrammatically shows a transversal section view of the crank group of figure 11.

### Detailed description of some exemplary embodiments of the invention

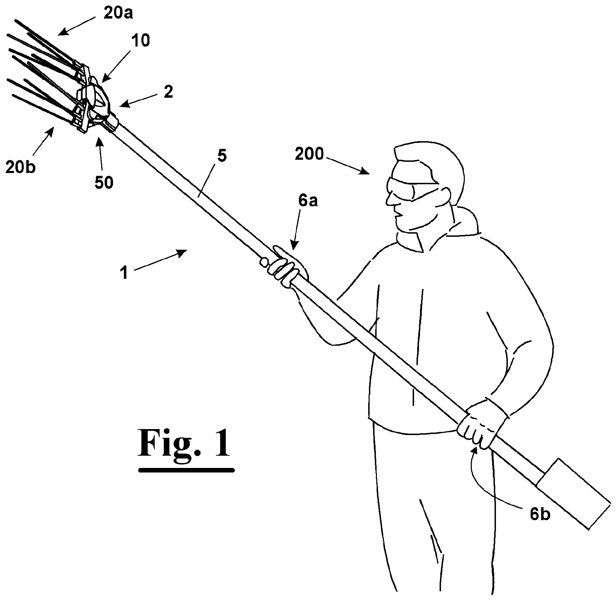

As diagrammatically shown in figure 1, an apparatus 1, according to the invention, for harvesting small fruits, in particular olives, almonds, pistachios and similar fruits, comprises a manoeuvring pole 5 provided with at least a handle portion 6, for example a first handle portion 6a and a second handle portion 6b, for allowing a user 200 to grasp the same. According to a known embodiment, the manoeuvring pole 5 can have a telescopic assembly, formed by two, or more sections, which are telescopically mounted one with respect to the other.

The apparatus 1 comprises, furthermore, a working head 2 having a support body 10, or protection carter, to which a first oscillating comb-like member 20a and a second oscillating comb-like member 20b are connected to. In particular, the first and second oscillating comb-like members 20a and 20b are positioned in the space in such a way to have a respective first end 21a and 21b facing with each other.

In particular, the first and second oscillating comb-like members 20a and 20b are pivotally connected to the support body 10 at respective fulcrum points 23a and 23b. More precisely, the first and second oscillating comb-like members 20a and 20b are positioned facing to each other and comprises, respectively, a first elongated base portion 30a and a second elongated base portion 30b provided, respectively, with a first plurality of rods 35a and with a second plurality of rods 35a and 35b. A motor group 50 is, furthermore, provided comprising, for example, a brushless motor, operatively connected to the first and to the second oscillating comb-like member 20a and 20b by a motion transmission group 60.

In particular, according to the invention, the motion transmission group 60 comprises a first connecting rod member 61a having a first end 62a pivotally connected to an end portion 31a of the first elongated base portion 30a, and a second end 63a arranged to connect the first connecting rod member 61a to a crank group 65. According to the invention, the motion transmission group 60 comprises, furthermore, a second connecting rod member 61b having a first end 62b pivotally connected to an end portion 31b of the second elongated base portion 30b and a second end 63b pivotally connected to the first connecting rod member 61a in a point comprised between the first end 62a and the second end 63a.

The technical solution according to the invention, allows, from the one hand, to obtain with respect to the prior art solutions, and in particular with respect to EP3430883 which provides two connecting rods superimposed to each other and hinged to the same eccentric pivot, a more effective transmission of the motion of the motor 50 to the first and second oscillating comb-like members 20a and 20b and, on the other hand to have a better sight for the user in operation conditions.

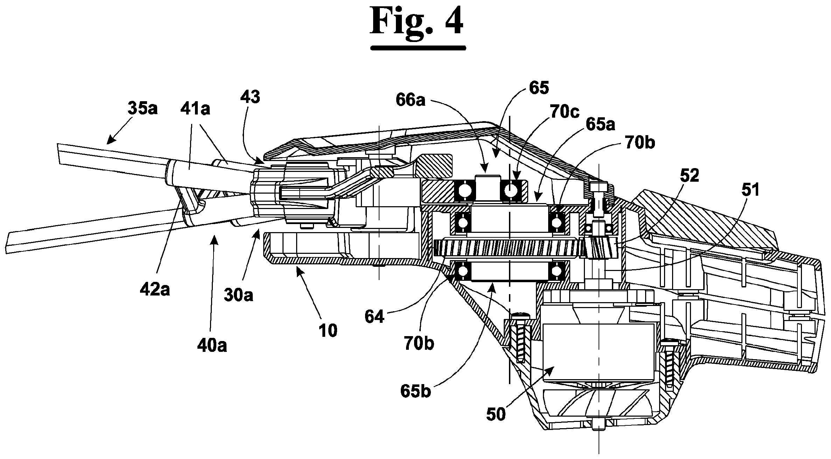

As diagrammatically shown for example in figure 4, the motor group 50 is provided with a motor shaft 51 on which a pinion 52 is mounted. This is arranged to directly mesh with a toothed wheel 64 of the crank group 65 to transmit to the same the rotational motion of motor shaft 51 and, therefore, the oscillating motion to the first comb-like member 30a by the first connecting rod member 61a. The oscillating motion is, therefore, transmitted also to the second comb-like member 30b by the second connecting rod member 61b hinged, as anticipated above, at the end portion 63b to the first connecting rod member 61a in a point positioned between the end portions 62a and 63a of the same.

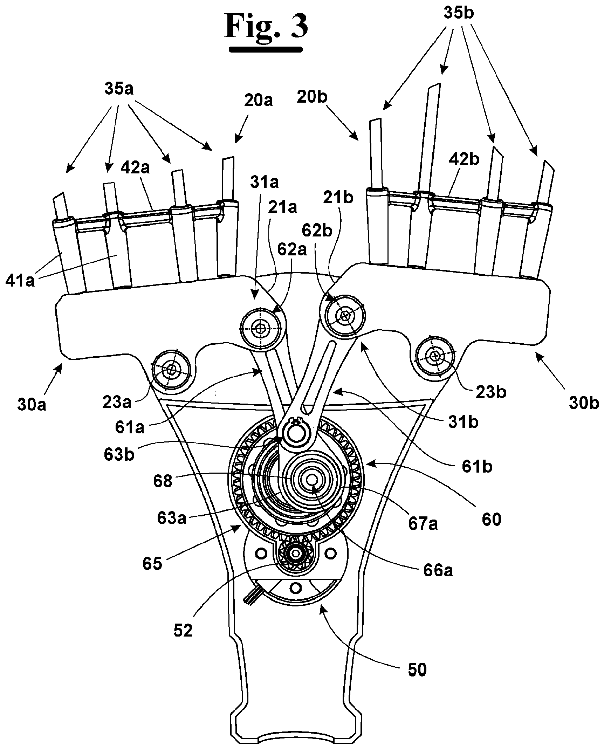

In particular, the crank group 65 is provided with an eccentric pivot 66a. This is arranged to engage in a hole 67a provided at the second end 63a of the first connecting rod member 61a. More in detail, according to a first embodiment of the invention for example diagrammatically shown in figure 3, between the hole 67a and the pivot 66a a bearing 68 can be provided.

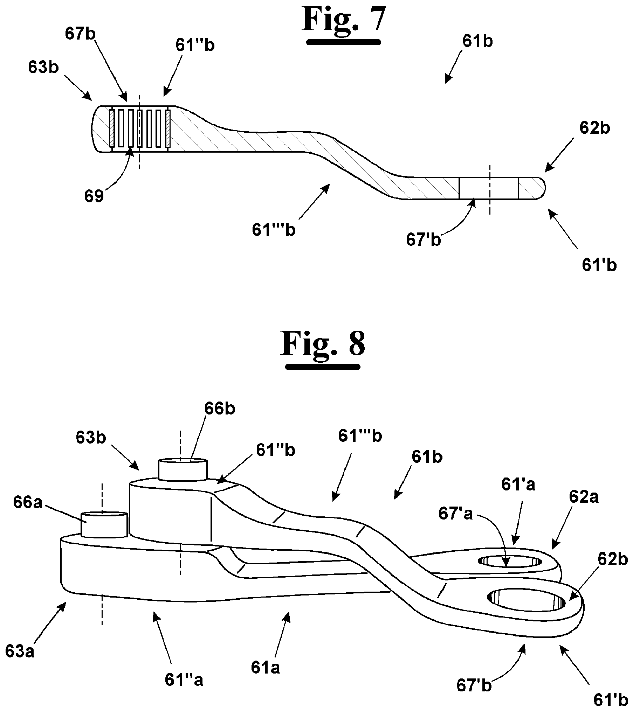

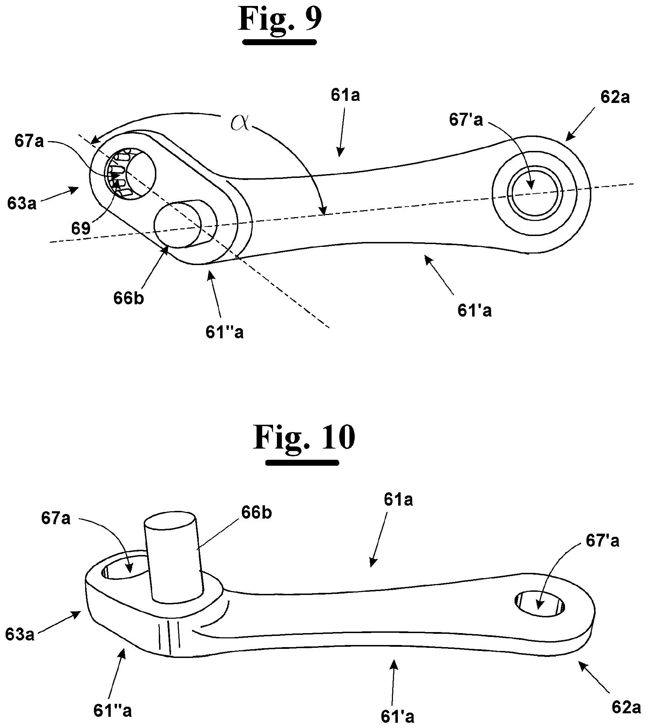

According to an alternative embodiment of the invention, between the hole 67a and the pivot 66a a plurality of rotating members 69 can be present, in particular a plurality of rollers, arranged to rotate, in use, about respective rotation axes. The plurality of rotating members 69 is coaxially positioned with respect to the hole 67a in such a way to form a "roller bearing member" of the type that is diagrammatically shown in figure 7 for the second connecting rod member 61b and in figure 9 for the first connecting rod member 61a.

In particular, the first connecting rod member 61a can be provided with a second pivot 66b protruding from a side, preferably from the side opposite to the connecting rod member 65. More in particular, at the second end 63b, the second connecting rod member 61b can be provided with a second hole 67b at which the aforementioned second pivot 66b is arranged to engage. According to an embodiment of the invention, between the second hole 67b and the second pivot 66b a plurality of rollers can be provided, in particular arranged within the body of the second connecting rod member 61b in such a way to form a roller bearing member 69, which is shown in figure 7 partially sectioned, coaxially arranged with respect to the aforementioned second hole 67b.

According to a possible embodiment provided and diagrammatically shown in figure 4 the crank group 65 comprises a first part 65a, and a respective second part 65b fixed at opposite sides to the toothed wheel 64. In particular, still with reference to figure 4 the first part 65a is provided with the eccentric pivot 66a. In particular, the first part 65a can be arranged to engage the second part 65b, by screws, bolts, or similar fixing members not shown in figure for simplicity, advantageously at respective flange portions.

Still with reference to figure 4, the first part 65a and the second part 65b of the crank group 65 are associated to respective bearings 70a and 70b. More in particular, the eccentric pivot 66a is arranged to pivotally engage into an engagement hole 67a provided at the second end 63a of the first connecting rod member 61a. In the preferred embodiment that is diagrammatically shown in detail in figure 4, between the eccentric pivot 66a and the engagement hole 67a a bearing 68 is provided.

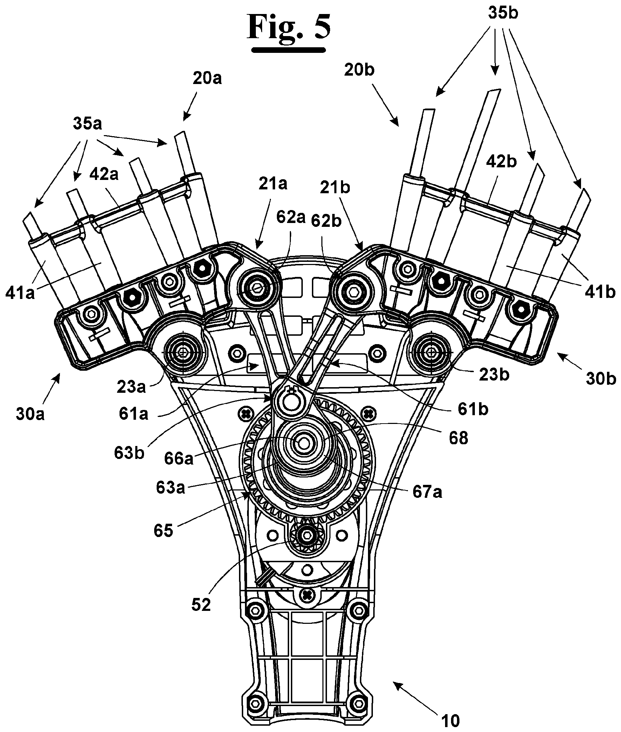

As shown for example in figure 5, in a possible embodiment of the invention, the first and second comb-like members 20a and 20b comprise, respectively, a first and a second directing body 40a and 40b. In particular, the first and second directing bodies 40a and 40b can, respectively, provide a first and a second plurality of tubular bodies 41a and 41b. Advantageously, each tubular body 41a is connected to a following tubular body 41b, by a connection member 42a and 42b, in particular a connection rod, preferably a transversal connection rod. More precisely, each tubular body 41a and 41b is arranged to house and direct along a predetermined direction a respective rod 35a and 35b. The first and second plurality of tubular bodies 41a and 41b are arranged to be engaged, respectively, to the first and to the second oscillating comb-like member 20a and 20b, in particular at respective engagement apertures 43.

According to an embodiment of the invention, the second connecting rod member 61b is foreseen shaped.

In particular, as diagrammatically shown in figure 7, the second connecting rod member 61b can comprise a first portion 61'b provided with the first end 62b pivotally connected to the second elongated base portion 30b and a second portion 61"b provided with the second end 63b hinged, in use, to the first connecting rod member 61a. More precisely, the second portion 62"b of the second connecting rod member 61b is provided with a second through hole 67b at which, in use, is arranged to engage the second pivot 66b, in particular protruding from the surface of the first connecting rod member 61a facing towards the second connecting rod member 61b.

More in particular, the first and second portions 61'b and 61"b are connected to each other by a connection portion 61"'b configured to position the first end 62b of the second connecting rod member 61b substantially coplanar to the first end 62a of the first connecting rod member 61a and, therefore, the elongated base portion 30b, to which is pivotally engaged, substantially coplanar to the first elongated base portion 30a.

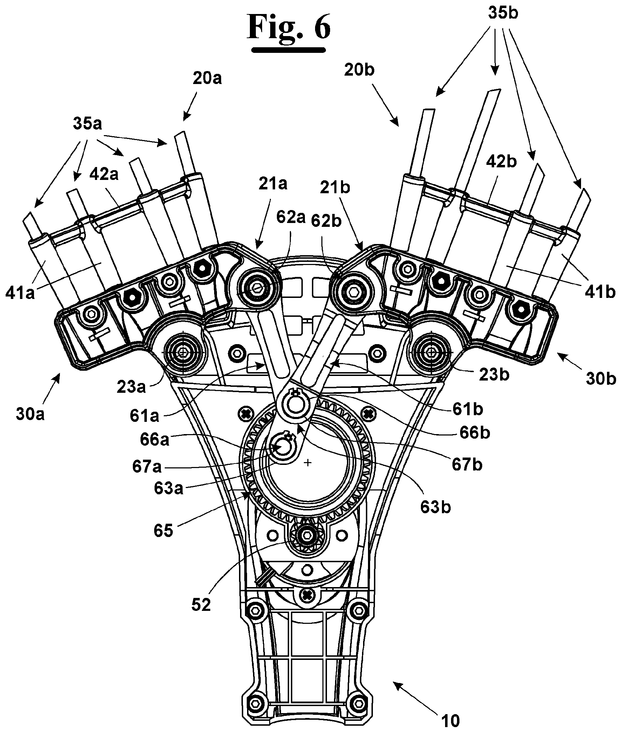

In the alternative embodiment that is diagrammatically shown in the figures 6, and from 8 to 10, the first connecting rod member 61a can comprise a first and a second portion 61'a and 61"a inclined in such a way to form a predetermined angle α. This can be, in particular, comprised between 90° and 150°, more in particular comprised between 100° and 140°, advantageously comprised between 110° and 130°, preferably comprised between 115° and 125°, for example equal to 120°. More in detail, the first portion 61'a of the first connecting rod member 61a can be provided with a through hole 67'a at which is pivotally connected the first comb-like elongated member 30a. The second portion 61"a of the first connecting rod member 61a can be provided with a hole 67a at which is arranged to engage the eccentric pivot 66a of the crank group 65 (figure 8). In the embodiment of the figures from 8 to 10, the second portion 61"a of the first connecting rod member 61a is provided with the second pivot 66b arranged to engage, in use, in the second hole 67b of the second connecting rod member 61b (figure 8).

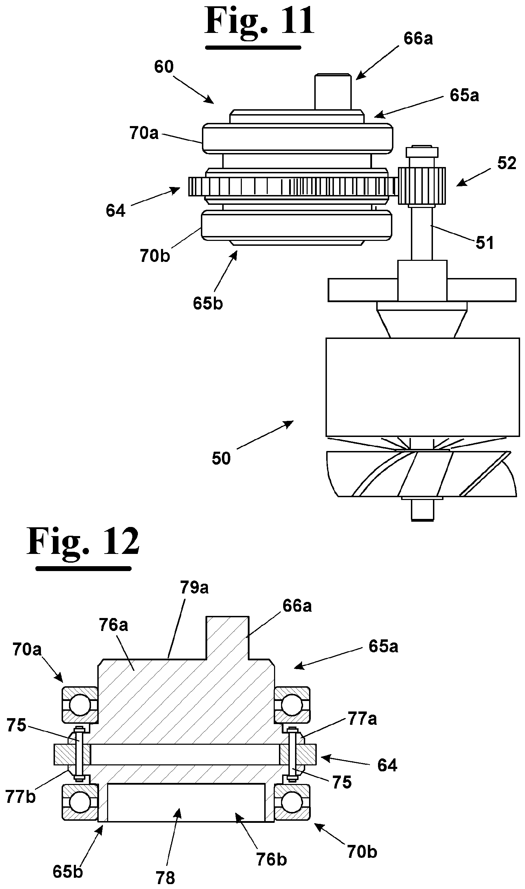

As diagrammatically shown for example in figure 12, both the first part and the second part 65a and 65b are configured to avoid that dusts, or other foreign materials, can penetrate between the different parts of the crank group 65. In particular, at least the first part 65a is, advantageously, configured to form a closed body. In particular, at least the first part 65a of the crank group 65 can be provided, at the opposite side of the toothed wheel 64, with an end wall 79a. In this way, it is possible to reduce the number of maintenance operations necessary to assure that the apparatus 1, and in particular the motion transmission group 60, is able to work in conditions of maximum effectiveness. It is, anyway, also provided the possibility that the second part 65b that is more difficult to be reached by foreign materials during working conditions, is provided with one, or more, grooves, or recessed portions 78, as diagrammatically shown in figure 12, in particular to lighten the component.

As diagrammatically shown in the figures 11 and 12, each of the aforementioned first and second part 65a and 65b, can comprise a respective flange portion 77a, 77b, from which is arranged to protrude a protruding portion 76a, 76b, for example substantially cylindrical, or substantially conical. In particular, the protruding portions 76a, and 76b have a width, or diameter, less than the respective flange portion 77a and 77b.

Still with reference to the figures from 11 to 12, the first part 65a and the second part 65b of the crank group 65 are, advantageously, associated to respective bearings 70a and 70b. In particular, the bearings 70a and 70b can be positioned at opposite sides of the toothed wheel 64 with respect to a respective flange portion 77a, 77b. The first and second flange portion 77a and 77b can be respectively constrained at opposite sides to the toothed crown 64, for example by fixing members 75, as for example bolts. As diagrammatically shown in figure 12 each bolt 75 can be arranged to move from a side to the other side of the toothed wheel 64 at a hole of which the same is provided with and, that, to protrude at opposite sides respectively of the first and the second flange portions 77a and 77b.

## Claims

1. An apparatus (1) for harvesting small fruits, in particular olives, almonds, pistachios and similar fruits, said apparatus (1) comprising:
- a handle portion (6,6a,6b) at which a user is arranged to grasp a manoeuvring pole (5) of said apparatus (1);
- a support body (10);
- a first and a second oscillating comb-like member (20a,20b) pivotally connected to said support body (10) at respective fulcrum points (23a,23b), said first and second oscillating comb-like members (20a,20b) being positioned side by side and comprising, respectively, a first and a second elongated base portion (30a,30b) provided, respectively, with a first and a second plurality of rods (35a,35b);
- a motor group (50) operatively connected to said first and second oscillating comb-like members (20a,20b) by a motion transmission group (60), said motion transmission group (60) comprising:
- a first connecting rod member (61a) having a first end (62a) pivotally connected to an end portion (31a) of said first elongated base portion (30a) and a second end (63a) arranged to connect said first connecting rod member (61a) to a crank group (65) operatively connected to said motor group (50) and provided with an eccentric pivot (66a) arranged to pivotally engage in an engagement hole (67a) provided at said second end (63a) of said first connecting rod member (61a);
- a second connecting rod member (61b) having a first end (62b) pivotally connected to an end portion (31b) of said second elongated base portion (30b) and a second end (63b) pivotally connected to said first connecting rod member (61a) at a point of said first connecting rod member (61a) positioned between said first and second end (62a,63a);
said apparatus (1) being **characterized in that** said motor group (50) comprises a motor shaft (51) on which a pinion (52) is mounted arranged to directly mesh with a toothed wheel (64) of said crank group (65) to transmit the motion to said first oscillating comb-like member (20a) by said first connecting rod member (61a), and to said second oscillating comb-like member (20b) by said second connecting rod member (61b) pivotally connected to said first connecting rod member (61a) **in that** said crank group (65) comprises a first part (65a) and a second part (65b) fixed at opposite sides to said toothed wheel (64), said first part (65a) being provided with said eccentric pivot (66a) **in that** said first part (65a) is connected to said second part (65b) of said crank group (65) at respective flange portions (77a,77b) **and in that** at least said first part (65a) is configured to form a closed body.

2. Apparatus (1) for harvesting small fruits according to claim 1, wherein said first end portions (31a,31b) of said first and second elongated base portions (30a,30b) are arranged to face with each other.

3. Apparatus (1) for harvesting small fruits according to claim 1 or 2, wherein between said eccentric pivot (66a) and said engagement hole (67a) a bearing (68) is provided.

4. Apparatus (1) for harvesting small fruits according to claim 1, or 2 wherein between said engagement hole (67a) and said eccentric pivot (66a) a plurality of rotating members (69) is provided arranged to rotate about a respective rotation axis, said plurality of rotating members (69) being coaxially positioned with respect to said engagement hole (67a).

5. Apparatus (1) for harvesting small fruits according to any previous claim, wherein said second connecting rod member (61b) at said second end (63b) is provided with a second through hole (67b) at which, in use, is arranged to engage a second pivot (66b) protruding from said first connecting rod member (61a).

6. Apparatus (1) for harvesting small fruits according to claim 5 wherein between said second hole (67b) and said second pivot (66b) a plurality of rotating members (69) is provided arranged to rotate about respective rotation axes, said plurality of rotating members (69) being coaxially positioned with respect to said second hole (67b).

7. Apparatus (1) for harvesting small fruits according to claim 1 wherein said first part (65a) and said second part (65b) of said crank group (65) are associated to respective bearings (70a,70b).

8. Apparatus (1) for harvesting small fruits according to any previous claim, wherein said first part (65a) at the opposite side of said toothed wheel (64) has an end wall (79a) in such a way to form a closed body which avoids that dirty and dust can reach the internal parts of said crank group (65).

9. Apparatus (1) for harvesting small fruits according to any previous claim, wherein said first and said second oscillating comb-like member (20a,20b) comprise, respectively, a first and a second directing body (40a,40b) comprising, respectively, a prima and a second plurality of tubular bodies (41a,41b) operatively connected by a plurality of connection rods (42a,42b), each tubular body (41a,41b) being arranged to house and direct along a predetermined direction a respective rod (35a,35b), said first and second pluralities of tubular bodies (41a,41b) being arranged to be engaged, respectively, to said first and said second oscillating comb-like members (20a,20b).

10. Apparatus (1) for harvesting small fruits according to any previous claim, wherein said first connecting rod member (61b) is shaped and comprises:
- a first portion (61'b) provided with the first end (62b) pivotally connected to said second elongated base portion (30b);
- a second portion (61"b) provided with the second end (63b) superimposed to said first connecting rod member (61a), said first and second portion (61'b,61"b) being connected by a connection portion (61‴b) configured to position said first end (62b) of said second connecting rod member (61b) and said first end (62a) of said first connecting rod member (61a) and, therefore, said first and second elongated base portions (30a,30b) substantially coplanar to each other.

11. Apparatus (1) for harvesting small fruits according to any previous claim, wherein said first connecting rod member (61a) comprises a first and a second portion (61'a,61"a) inclined in such a way to form a predetermined angle α.

12. Apparatus (1) for harvesting small fruits according to claim 11, wherein said second portion (61"a) of said first connecting rod member (61a) is provided with said secondo pivot (66b).

13. Apparatus (1) for harvesting small fruits according to claim 11, wherein said predetermined angle α is comprised between 90° and 150°.

14. Apparatus (1) for harvesting small fruits according to claim 11, wherein said predetermined angle α is comprised between 100° and 140°.

15. Apparatus (1) for harvesting small fruits according to claim 11, wherein said predetermined angle α is comprised between 110° and 130.

## Patentansprüche

1. Vorrichtung (1) zum Ernten von kleinen Früchten, insbesondere Oliven, Mandeln, Pistazien und ähnlichen Früchten, wobei die Vorrichtung (1) Folgendes umfasst:
- einen Griffabschnitt (6, 6a, 6b), an dem ein Benutzer angeordnet ist, um eine Manövrierstange (5) der Vorrichtung (1) zu greifen;
- einen Stützkörper (10);
- ein erstes und ein zweites oszillierendes kammartiges Element (20a, 20b), die schwenkbar mit dem Stützkörper (10) an jeweiligen Drehpunkten (23a, 23b) verbunden sind, wobei das erste und zweite oszillierende kammartige Element (20a, 20b) Seite an Seite positioniert sind und jeweils einen ersten und einen zweiten länglichen Basisabschnitt (30a, 30b) umfassen, die jeweils mit einer ersten und einer zweiten Vielzahl von Stangen (35a, 35b) bereitgestellt sind;
- eine Motorgruppe (50), die durch eine Bewegungsübertragungsgruppe (60) betriebsmäßig mit dem ersten und zweiten oszillierenden kammartigen Element (20a, 20b) verbunden ist, wobei die Bewegungsübertragungsgruppe (60) Folgendes umfasst:
- ein erstes Pleuelstangenelement (61a) mit einem ersten Ende (62a), das schwenkbar mit einem Endabschnitt (31a) des ersten länglichen Basisabschnitts (30a) verbunden ist, und einem zweiten Ende (63a), das so angeordnet ist, dass es das erste Pleuelstangenelement (61a) mit einer Kurbelgruppe (65) verbindet, die betriebsmäßig mit der Motorgruppe (50) verbunden ist und mit einem exzentrischen Drehzapfen (66a) bereitgestellt ist, der so angeordnet ist, dass er schwenkbar in ein Eingriffsloch (67a) eingreift, das an dem zweiten Ende (63a) des ersten Pleuelstangenelements (61a) bereitgestellt ist;
- ein zweites Pleuelstangenelement (61b) mit einem ersten Ende (62b), das schwenkbar mit einem Endabschnitt (31b) des zweiten länglichen Basisabschnitts (30b) verbunden ist, und einem zweiten Ende (63b), das schwenkbar mit dem ersten Pleuelstangenelement (61a) an einem Punkt des ersten Pleuelstangenelements (61a) verbunden ist, der zwischen dem ersten und zweiten Ende (62a, 63a) positioniert ist;
wobei die Vorrichtung (1) **dadurch gekennzeichnet ist, dass** die Motorgruppe (50) eine Motorwelle (51) umfasst, auf der ein Ritzel (52) montiert ist, das so angeordnet ist, dass es direkt mit einem Zahnrad (64) der Kurbelgruppe (65) kämmt, um die Bewegung durch das erste Pleuelstangenelement (61a) auf das erste oszillierende kammartige Element (20a) und durch das zweite Pleuelstangenelement (61b), das schwenkbar mit dem ersten Pleuelstangenelement (61a) verbunden ist, auf das zweite oszillierende kammartige Element (20b) zu übertragen, **dass** die Kurbelgruppe (65) ein erstes Teil (65a) und ein zweites Teil (65b) umfasst, die an gegenüberliegenden Seiten an dem Zahnrad (64) befestigt sind, wobei das erste Teil (65a) mit dem exzentrischen Drehzapfen (66a) bereitgestellt ist, **dass** das erste Teil (65a) mit dem zweiten Teil (65b) der Kurbelgruppe (65) an jeweiligen Flanschabschnitten (77a, 77b) verbunden ist **und dass** zumindest das erste Teil (65a) so konfiguriert ist, dass es einen geschlossenen Körper bildet.

2. Vorrichtung (1) zum Ernten von kleinen Früchten nach Anspruch 1, wobei die ersten Endabschnitte (31a, 31b) des ersten und zweiten länglichen Basisabschnittes (30a, 30b) so angeordnet sind, dass sie einander zugewandt sind.

3. Vorrichtung (1) zum Ernten von kleinen Früchten nach Anspruch 1 oder 2, wobei zwischen dem exzentrischen Drehzapfen (66a) und dem Eingriffsloch (67a) ein Lager (68) bereitgestellt ist.

4. Vorrichtung (1) zum Ernten von kleinen Früchten nach Anspruch 1 oder 2, wobei zwischen dem Eingriffsloch (67a) und dem exzentrischen Drehzapfen (66a) eine Vielzahl von rotierenden Elementen (69) bereitgestellt ist, die so angeordnet sind, dass sie sich um eine jeweilige Rotationsachse drehen, wobei die Vielzahl von rotierenden Elementen (69) koaxial in Bezug auf das Eingriffsloch (67a) positioniert ist.

5. Vorrichtung (1) zum Ernten von kleinen Früchten nach einem der vorhergehenden Ansprüche, wobei das zweite Pleuelstangenelement (61b) an dem zweiten Ende (63b) mit einem zweiten Durchgangsloch (67b) bereitgestellt ist, an dem es bei Verwendung so angeordnet ist, dass es in einen zweiten Drehzapfen (66b) eingreift, der aus dem ersten Pleuelstangenelement (61a) hervorsteht.

6. Vorrichtung (1) zum Ernten von kleinen Früchten nach Anspruch 5, wobei zwischen dem zweiten Loch (67b) und dem zweiten Drehzapfen (66b) eine Vielzahl von rotierenden Elementen (69) bereitgestellt ist, die so angeordnet sind, dass sie sich um jeweilige Rotationsachsen drehen, wobei die Vielzahl von rotierenden Elementen (69) koaxial in Bezug auf das zweite Loch (67b) positioniert ist.

7. Vorrichtung (1) zum Ernten von kleinen Früchten nach Anspruch 1, wobei das erste Teil (65a) und das zweite Teil (65b) der Kurbelgruppe (65) jeweiligen Lagern (70a, 70b) zugeordnet sind.

8. Vorrichtung (1) zum Ernten von kleinen Früchten nach einem der vorhergehenden Ansprüche, wobei das erste Teil (65a) auf der dem Zahnrad (64) gegenüberliegenden Seite eine Endwand (79a) aufweist, auf derartige Weise, dass ein geschlossener Körper gebildet wird, der verhindert, dass Schmutz und Staub in die inneren Teile der Kurbelgruppe (65) gelangen können.

9. Vorrichtung (1) zum Ernten von kleinen Früchten nach einem der vorhergehenden Ansprüche, wobei das erste und das zweite oszillierende kammartige Element (20a, 20b) jeweils einen ersten und einen zweiten Führungskörper (40a, 40b) umfassen, die jeweils eine erste und eine zweite Vielzahl von rohrförmigen Körpern (41a, 41b) umfassen, die durch eine Vielzahl von Verbindungsstangen (42a, 42b) betriebsmäßig verbunden sind, wobei jeder rohrförmige Körper (41a, 41b) so angeordnet ist, dass er eine jeweilige Stange (35a, 35b) aufnimmt und entlang einer vorbestimmten Richtung führt, wobei die erste und zweite Vielzahl von rohrförmigen Körpern (41a, 41b) so angeordnet sind, dass sie jeweils mit dem ersten und mit dem zweiten oszillierenden kammartigen Element (20a, 20b) in Eingriff stehen.

10. Vorrichtung (1) zum Ernten von kleinen Früchten nach einem der vorhergehenden Ansprüche, wobei das erste Pleuelstangenelement (61b) geformt ist und Folgendes umfasst:
- einen ersten Abschnitt (61'b), der mit dem ersten Ende (62b) bereitgestellt ist, das schwenkbar mit dem zweiten länglichen Basisabschnitt (30b) verbunden ist;
- einen zweiten Abschnitt (61"b), der mit dem zweiten Ende (63b) bereitgestellt ist, das über dem ersten Pleuelstangenelement (61a) liegt, wobei der erste und zweite Abschnitt (61'b, 61"b) durch einen Verbindungsabschnitt (61‴b) verbunden sind, der so konfiguriert ist, dass er das erste Ende (62b) des zweiten Pleuelstangenelements (61b) und das erste Ende (62a) des ersten Pleuelstangenelements (61a) positioniert und daher der erste und zweite längliche Basisabschnitt (30a, 30b) im Wesentlichen in einer Ebene zueinander liegen.

11. Vorrichtung (1) zum Ernten von kleinen Früchten nach einem der vorhergehenden Ansprüche, wobei das erste Pleuelstangenelement (61a) einen ersten und einen zweiten Abschnitt (61'a, 61"a) umfasst, die derart geneigt sind, dass sie einen vorbestimmten Winkel α bilden.

12. Vorrichtung (1) zum Ernten von kleinen Früchten nach Anspruch 11, wobei der zweite Abschnitt (61"a) des ersten Pleuelstangenelements (61a) mit dem zweiten Drehzapfen (66b) bereitgestellt ist.

13. Vorrichtung (1) zum Ernten von kleinen Früchten nach Anspruch 11, wobei der vorbestimmte Winkel α zwischen 90° und 150° umfasst ist.

14. Vorrichtung (1) zum Ernten von kleinen Früchten nach Anspruch 11, wobei der vorbestimmte Winkel α zwischen 100° und 140° umfasst ist.

15. Vorrichtung (1) zum Ernten von kleinen Früchten nach Anspruch 11, wobei der vorbestimmte Winkel α zwischen 110° und 130° umfasst ist.

## Revendications

1. Appareil (1) pour la récolte de petits fruits, notamment des olives, des amandes, des pistaches et des fruits similaires, ledit appareil (1) comprenant :
- une partie poignée (6, 6a, 6b) au niveau de laquelle se trouve un utilisateur pour saisir une perche de manoeuvre (5) dudit appareil (1) ;
- un corps de support (10) ;
- un premier et un second éléments oscillants en forme de peigne (20a, 20b) reliés de manière pivotante audit corps de support (10) au niveau de points d'appui respectifs (23a, 23b), lesdits premier et second éléments oscillants en forme de peigne (20a, 20b) étant positionnés côte à côte et comprenant, respectivement, une première et une seconde partie de base allongée (30a, 30b) dotées, respectivement, d'une première et d'une seconde pluralité de tiges (35a, 35b) ;
- un groupe moteur (50) relié de manière opérationnelle auxdits premier et second éléments oscillants en forme de peigne (20a, 20b) par un groupe de transmission de mouvement (60), ledit groupe de transmission de mouvement (60) comprenant :
- un premier élément de bielle (61a) ayant une première extrémité (62a) reliée de manière pivotante à une partie d'extrémité (31a) de ladite première partie de base allongée (30a) et une seconde extrémité (63a) agencée pour relier ledit premier élément de bielle (61a) à un groupe manivelle (65) relié de manière opérationnelle audit groupe moteur (50) et pourvu d'un pivot excentrique (66a) agencé pour s'engager de manière pivotante dans un trou d'engagement (67a) prévu au niveau de ladite seconde extrémité (63a) dudit premier élément de bielle (61a) ;
- un second élément de bielle (61b) ayant une première extrémité (62b) reliée de manière pivotante à une partie d'extrémité (31b) de ladite seconde partie de base allongée (30b) et une seconde extrémité (63b) reliée de manière pivotante audit premier élément de bielle (61a) au niveau d'un point dudit premier élément de bielle (61a) positionné entre lesdites première et seconde extrémités (62a, 63a) ;
ledit appareil (1) étant **caractérisé en ce que** ledit groupe moteur (50) comprend un arbre moteur (51) sur lequel est monté un pignon (52) agencé pour s'engrener directement avec une roue dentée (64) dudit groupe manivelle (65) pour transmettre le mouvement audit premier élément oscillant en forme de peigne (20a) par ledit premier élément de bielle (61a), et audit second élément oscillant en forme de peigne (20b) par ledit second élément de bielle (61b) relié de manière pivotante audit premier élément de bielle (61a) **en ce que** ledit groupe manivelle (65) comprend une première pièce (65a) et une seconde pièce (65b) fixées sur des côtés opposés à ladite roue dentée (64), ladite première pièce (65a) étant pourvue dudit pivot excentrique (66a) **en ce que** ladite première pièce (65a) est reliée à ladite seconde pièce (65b) dudit groupe manivelle (65) au niveau de parties de bride respectives (77a, 77b) **et en ce qu'**au moins ladite première pièce (65a) est configurée pour former un corps fermé.

2. Appareil (1) pour la récolte de petits fruits selon la revendication 1, dans lequel lesdites premières parties d'extrémités (31a, 31b) desdites première et seconde parties de base allongées (30a, 30b) sont disposées pour se faire face.

3. Appareil (1) pour la récolte de petits fruits selon la revendication 1 ou 2, dans lequel entre ledit pivot excentrique (66a) et ledit trou d'engagement (67a), un palier (68) est prévu.

4. Appareil (1) pour la récolte de petits fruits selon la revendication 1 ou 2, dans lequel entre ledit trou d'engagement (67a) et ledit pivot excentrique (66a), une pluralité d'éléments rotatifs (69) sont prévus, agencés pour tourner autour d'un axe de rotation respectif, ladite pluralité d'éléments rotatifs (69) étant positionnés coaxialement par rapport audit trou d'engagement (67a).

5. Appareil (1) pour la récolte de petits fruits selon l'une quelconque des revendications précédentes, dans lequel ledit second élément de bielle (61b) au niveau de ladite seconde extrémité (63b) est pourvu d'un second trou traversant (67b) au niveau duquel, lors de l'utilisation, est agencé pour s'engager un second pivot (66b) faisant saillie dudit premier élément de bielle (61a).

6. Appareil (1) pour la récolte de petits fruits selon la revendication 5 dans lequel entre ledit second trou (67b) et ledit second pivot (66b), une pluralité d'éléments rotatifs (69) sont prévus, agencés pour tourner autour d'axes de rotation respectifs, ladite pluralité d'éléments rotatifs (69) étant positionnés coaxialement par rapport audit second trou (67b).

7. Appareil (1) pour la récolte de petits fruits selon la revendication 1 dans lequel ladite première pièce (65a) et ladite seconde pièce (65b) dudit groupe manivelle (65) sont associées à des paliers respectifs (70a, 70b).

8. Appareil (1) pour la récolte de petits fruits selon l'une quelconque des revendications précédentes, dans lequel ladite première pièce (65a) au niveau du côté opposé de ladite roue dentée (64) présente une paroi d'extrémité (79a) de telle manière à former un corps fermé qui évite que la saleté et la poussière puissent atteindre les pièces internes dudit groupe manivelle (65).

9. Appareil (1) pour la récolte de petits fruits selon l'une quelconque des revendications précédentes, dans lequel lesdits premier et second éléments oscillants en forme de peigne (20a, 20b) comprennent, respectivement, un premier et un second corps directeurs (40a, 40b) comprenant, respectivement, une première et une seconde pluralité de corps tubulaires (41a, 41b) reliés fonctionnellement par une pluralité de bielles (42a, 42b), chaque corps tubulaire (41a, 41b) étant agencé pour loger et diriger le long d'une direction prédéterminée une tige respective (35a, 35b), lesdites première et seconde pluralités de corps tubulaires (41a, 41b) étant agencés pour venir en prise, respectivement, avec ledit premier et ledit second éléments oscillants en forme de peigne (20a, 20b).

10. Appareil (1) pour la récolte de petits fruits selon l'une quelconque des revendications précédentes, dans lequel ledit premier élément de bielle (61b) est formé et comprend :
- une première partie (61'b) pourvue d'une première extrémité (62b) reliée de manière pivotante à ladite seconde partie de base allongée (30b) ;
- une seconde partie (61"b) pourvue de la seconde extrémité (63b) superposée audit premier élément de bielle (61a), lesdites première et seconde parties (61'b, 61"b) étant reliées par une partie de connexion (61"'b) configurée pour positionner ladite première extrémité (62b) dudit second élément de bielle (61b) et ladite première extrémité (62a) dudit premier élément de bielle (61a) et, par conséquent, lesdites première et seconde parties de base allongées (30a, 30b) sensiblement coplanaires l'une par rapport à l'autre.

11. Appareil (1) pour la récolte de petits fruits selon l'une quelconque des revendications précédentes, dans lequel ledit premier élément de bielle (61a) comprend une première et une seconde parties (61'a, 61"a) inclinées de telle manière à former un angle prédéterminé α.

12. Appareil (1) pour la récolte de petits fruits selon la revendication 11, dans lequel ladite seconde partie (61"a) dudit premier élément de bielle (61a) est pourvue dudit pivot secondaire (66b).

13. Appareil (1) pour la récolte de petits fruits selon la revendication 11, dans lequel ledit angle prédéterminé α est compris entre 90° et 150°.

14. Appareil (1) pour la récolte de petits fruits selon la revendication 11, dans lequel ledit angle prédéterminé α est compris entre 100° et 140°.

15. Appareil (1) pour la récolte de petits fruits selon la revendication 11, dans lequel ledit angle prédéterminé α est compris entre 110° et 130°.
